# FASCICULE DE BREVET EUROPEEN

(11) **EP 4 136 424 B1**
(45) Date de publication et mention de la délivrance du brevet: **31.01.2024**
(21) Numéro de dépôt: 21718568.5
(22) Date de dépôt: 13.04.2021
(51) Int. Cl.: G01M 3/14, G01M 3/22

(54) **DISPOSITIF DE CONTRÔLE DE L'ÉTANCHÉITÉ DE COMPOSANTS D'ÉTANCHÉITÉ**
VORRICHTUNG ZUR ÜBERWACHUNG DER DICHTIGKEIT VON DICHTUNGSELEMENTEN
DEVICE FOR MONITORING THE TIGHTNESS OF SEALING COMPONENTS

(30) Priorité: 15.04.2020 FR 2003760
(43) Date de publication de la demande: 22.02.2023
(73) Titulaire: GAZTRANSPORT ET TECHNIGAZ, 78470 Saint-Rémy-lès-Chevreuse (FR)
(72) Inventeur: JOLIVET, Pierre, 78470 Saint-Rémy-lès-Chevreuse (FR); HASSLER, David, 78470 Saint-Rémy-lès-Chevreuse (FR); GLORY, Julien, 78470 Saint-Rémy-lès-Chevreuse (FR)
(74) Mandataire: Loyer & Abello
(86) Numéro de dépôt international: PCT/EP2021/059506
(87) Numéro de publication internationale: WO 2021/209421

(56) Documents cités:
- WO-A1-2019/180373
- FR-A1- 3 095 043
- JP-A- 2000 329 638
- KR-A- 20160 035 430
- US-A- 4 002 055
- US-A- 4 104 905
- US-A- 5 559 282

## Description

### Domaine technique

L'invention se rapporte au domaine des dispositifs de contrôle de l'étanchéité de composants d'étanchéité, tels qu'une membrane simple couche ou multicouche (par exemple un composite de type triplex) pour une cuve de stockage de fluide, tel qu'un gaz liquéfié. En particulier, ces cuves peuvent être des cuves étanches et thermiquement isolantes, à membranes pour le stockage et/ou le transport de gaz liquéfié à basse température, telles que des cuves pour le transport de Gaz de Pétrole Liquéfié (aussi appelé GPL) présentant par exemple une température comprise entre -50°C et 0°C, ou pour le transport de Gaz Naturel Liquéfié (GNL) présentant une température d'environ -162°C à pression atmosphérique. Ces cuves peuvent être installées à terre, dans/sous l'eau du type GBS (pour « Gravity-Based Structure ») ou sur un ouvrage flottant. Dans le cas d'un ouvrage flottant, la cuve peut être destinée au transport de gaz liquéfié ou à recevoir du gaz liquéfié servant de carburant pour la propulsion de l'ouvrage flottant.

### Arrière-plan technologique

Afin de réaliser un test d'étanchéité d'une membrane d'étanchéité d'une cuve de stockage de fluide, il est connu de l'art antérieur d'utiliser un dispositif de contrôle de l'étanchéité comprenant une boite dite à vide qui comporte une chambre interne où une dépression est réalisée afin de vérifier localement l'étanchéité. Une telle boîte à vide comprend un couvercle transparent et une cloison périphérique présentant un joint d'étanchéité périphérique qui est destinée à être plaquée contre la membrane d'étanchéité à tester afin de fermer la chambre interne de manière étanche.

Pour réaliser le test d'étanchéité avec un tel dispositif de contrôle, de l'eau comprenant des tensioactifs tel que le savon est appliqué sur la portion de membrane à tester. Puis, le dispositif de contrôle est posé sur la portion à tester et la chambre interne est mise en dépression, la dimension de la portion à tester correspondant ainsi à la dimension de la chambre interne. Ainsi, en cas d'une fuite de la membrane, il est possible d'observer par le couvercle transparent, dans la zone de la fuite, des bulles se former.

Afin de réaliser un contrôle d'étanchéité de toute la membrane, il est donc nécessaire de répéter cette opération un grand nombre de fois dans les zones planes et dans les zones d'angle de la cuve, et notamment au niveau des jonctions entre deux bandes de la membrane d'étanchéité où celles-ci sont collées l'une à l'autre. A titre d'exemple, pour une cuve de GNL ou GPL de dimensions classiques, la vérification de l'étanchéité d'une membrane recouvrant au moins partiellement les différentes faces de la cuve nécessite plusieurs milliers de tests d'étanchéité, généralement de l'ordre de 3000 à 5000 tests pour couvrir l'ensemble des zones à contrôler. Ces opérations successives sont difficiles à mettre en oeuvre, nécessitent une pluralité d'opérateurs et demandent beaucoup de temps afin de réaliser la totalité du contrôle d'étanchéité.

WO2019/180373 décrit un procédé d'injection d'un gaz traceur dans un espace thermiquement isolant d'une cuve étanche et thermiquement isolante.

KR 2016 0035430 décrit un appareil de test d'étanchéité pour une cuve de gaz naturel liquéfié.

US4002055 décrit un appareil pour tester la résistance et/ou l'étanchéité des soudures ou des joints formés entre des feuilles de résine synthétique, qui possède une poignée de manutention, un couvercle transparent, une cloison périphérique apte à être posée sur une zone de test en formant une chambre interne qui peut être mise sous dépression.

JP2000329638 décrit un testeur par dépression qui contrôle la présence ou l'absence de fuite au niveau des soudures dans une cuve.

US5559282 décrit une méthode et un appareil pour tester l'efficacité d'une installation de barrière d'air.

US4104905 décrit un appareil pour tester l'étanchéité d'une membrane de cuve.

### Résumé

Une idée à la base de l'invention est de proposer un dispositif de contrôle de l'étanchéité permettant de tester l'étanchéité d'une membrane étanche d'une cuve qui soit fiable et facilement utilisable dans la cuve.

Une autre idée à la base de l'invention est de proposer un dispositif de contrôle de l'étanchéité qui est utilisable rapidement permettant de tester l'étanchéité d'une membrane étanche d'une cuve en un minimum de temps.

Selon un mode de réalisation, l'invention fournit un dispositif de contrôle de l'étanchéité d'un composant d'étanchéité, tel qu'une membrane ou un multicouche, pour une cuve de stockage de fluide, dans lequel le dispositif de contrôle comporte une boîte comprenant :
- une cloison périphérique comportant une paroi périphérique présentant une extrémité inférieure équipée d'un joint périphérique destiné à être positionné contre le composant d'étanchéité,
- un couvercle réalisé dans un matériau transparent, le couvercle étant relié à la cloison périphérique de telle sorte que le couvercle et paroi périphérique soient aptes à définir, avec le composant d'étanchéité, une chambre interne, le joint périphérique étant disposé tout autour de la chambre interne, et dans lequel le dispositif de contrôle comprend :
- une poignée de manutention fixée à la boîte ;
- un organe de commande actionnable manuellement pour produire un signal de commande, l'organe de commande étant positionné sur ou à proximité immédiate de la poignée de manutention de sorte à être actionnable par une main d'un utilisateur tenant la poignée de manutention,
- un dispositif de mise en dépression qui est raccordé à la chambre interne et est configuré pour mettre en dépression à l'aide d'un organe de mise en dépression ladite chambre interne, le dispositif de mise en dépression étant muni d'une vanne commandée commutable dans un état ouvert pour relier la chambre interne à l'organe de mise en dépression et un état fermé pour isoler la chambre interne de l'organe de mise en dépression ;
- une unité de commande configurée pour commuter la vanne commandée en réponse au signal de commande.

Grâce à ces caractéristiques, l'organe de commande situé sur ou à proximité de la poignée de manutention permet une utilisation fiable et facile par un unique utilisateur qui peut placer le dispositif de contrôle à l'aide de la poignée de manutention tout en actionnant la mise sous vide sans avoir besoin de lâcher la poignée de manutention ou nécessiter la présence d'un autre utilisateur. De plus, un tel dispositif permet une utilisation plus rapide et ainsi permet de tester l'étanchéité d'une membrane étanche d'une cuve en un minimum de temps.

Selon des modes de réalisation, un tel dispositif de contrôle peut comporter une ou plusieurs des caractéristiques suivantes.

Selon un mode de réalisation, l'unité de commande est configurée pour commuter la vanne commandée alternativement entre l'état ouvert et l'état fermé en réponse au signal de commande.

Selon un mode de réalisation, l'organe de commande est un premier organe de commande actionnable manuellement pour produire un premier signal de commande et le dispositif de contrôle comporte en outre un deuxième organe de commande actionnable manuellement pour produire un deuxième signal de commande, l'unité de commande étant configurée pour commuter la vanne commandée dans l'état ouvert en réponse au premier signal de commande et dans l'état fermé en réponse au deuxième signal de commande.

Selon un mode de réalisation, la poignée de manutention est une première poignée de manutention et le dispositif de contrôle comporte en outre une deuxième poignée de manutention, la première poignée de manutention et la deuxième poignée de manutention étant disposées sur le pourtour de la boite à l'opposé l'une de l'autre.

Selon un mode de réalisation, la paroi périphérique est une paroi périphérique interne et le joint périphérique est un joint périphérique interne, la cloison périphérique comportant une paroi périphérique externe disposée à l'extérieur de la paroi périphérique interne de manière à définir, entre la paroi périphérique externe et la paroi périphérique interne une chambre intermédiaire, la paroi externe périphérique présentant une extrémité inférieure équipée d'un joint périphérique externe destiné à être positionné contre le composant d'étanchéité tout autour du joint périphérique interne ; et dans lequel le dispositif de mise en dépression est raccordé à la chambre interne et à la chambre intermédiaire et est configuré pour mettre en dépression à l'aide de l'organe de mise en dépression ladite chambre interne et ladite chambre intermédiaire, le dispositif de mise en dépression étant muni de la vanne commandée commutable dans un état ouvert pour relier la chambre interne et la chambre intermédiaire à l'organe de mise en dépression et un état fermé pour isoler la chambre interne et la chambre intermédiaire de l'organe de mise en dépression.

Selon un mode de réalisation, le joint périphérique ou le joint périphérique interne et/ ou le joint périphérique externe présente une extrémité de joint formant une boucle tout autour de la chambre interne et destinée à être positionnée contre le composant d'étanchéité, l'extrémité de joint étant situé dans un plan, et le couvercle étant formé parallèlement audit plan de sorte à former un dispositif de contrôle de l'étanchéité pour zone plane.

Ainsi, le dispositif de contrôle est adapté pour effectuer le contrôle de l'étanchéité dans les zones planes de la cuve.

Selon un mode de réalisation, le joint périphérique ou le joint périphérique interne et/ ou le joint périphérique externe présente une extrémité de joint formant une boucle tout autour de la chambre interne et destinée à être positionnée contre le composant d'étanchéité, une première partie de l'extrémité de joint étant située dans un premier plan et une deuxième partie de l'extrémité de joint étant située dans un deuxième plan incliné par rapport au premier plan, et le couvercle étant formé dans un plan incliné par rapport au premier plan et au deuxième plan de sorte à former un dispositif de contrôle (4) de l'étanchéité pour zone d'angle.

Ainsi, le dispositif de contrôle est adapté pour effectuer le contrôle de l'étanchéité dans les zones d'angle de la cuve. En effet, la forme des joints périphériques permet de suivre l'inclinaison des parois de cuve dans les zones d'angle et ainsi de conserver une chambre interne et une chambre intermédiaire étanche.

D'autre part, comme exposé dans la suite, les dimensions de la boîte selon l'invention sont choisies de telle manière à s'adapter parfaitement aux zones à tester, sans être trop grandes. En effet, il doit être noté ici qu'en particulier dans les zones d'angle, ou en angle, la surface de test est très souvent irrégulière et l'angle réel différent de celui théorie de conception de sorte qu'une boîte aux dimensions trop importantes tiendrait très difficilement le vide nécessaire aux tests d'étanchéité.

Selon un mode de réalisation, le premier plan et le deuxième plan sont inclinés l'un par rapport à l'autre d'un angle compris entre 60 et 170 degrés, de préférence d'un angle égal à 90 degrés, 135° ou à 108,4 degrés ou encore à 161,6 degrés. On peut noter ici que des angles d'inclinaison entre deux faces contiguës relativement fréquents dans le domaine de l'invention, donc pour des cuves de GNL ou GPL, sont typiquement 90° et 135°.

Selon un mode de réalisation, le dispositif de contrôle comporte une dimension longitudinale comprise entre 290 et 432 mm, de préférence égale à 320 mm ou 430mm, la dimension longitudinale étant destinée à être parallèle à une arête de cuve lors de l'utilisation. Ainsi, en zone standard, c'est-à-dire par exemple les zones planes supérieure et inférieure de la cuve, la dimension longitudinale classique est de 320 mm (millimètre) tandis que pour les zones d'angle, entre deux faces de la cuve, la dimension longitudinale est classiquement de 430 mm.

Ainsi, le dispositif de contrôle a une dimension longitudinale optimale afin de réaliser un contrôle d'étanchéité sur toute une largeur de bande de membrane d'étanchéité tout en passant entre deux blocs isolants primaires préassemblés.

Selon un mode de réalisation, le dispositif de contrôle comporte au moins un dispositif d'éclairage fixé à la cloison périphérique et configuré pour éclairer la chambre interne.

Ainsi, le dispositif d'éclairage permet d'améliorer la qualité du contrôle d'étanchéité, réalisé visuellement, en permettant d'identifier plus facilement les éventuelles fuites.

Selon un mode de réalisation, le dispositif de contrôle comporte une pluralité de dispositifs d'éclairage placés tout autour de la chambre interne. Par exemple, l'éclairage est réalisé à l'aide d'un bandeau de LEDs.

Selon un mode de réalisation, le dispositif de contrôle comprend un tuyau d'évacuation d'air qui est raccordé, d'une part, à un organe de mise en dépression du dispositif de mise en dépression et, d'autre part, à la chambre intermédiaire de manière à placer la chambre intermédiaire sous une pression P1 inférieure à la pression atmosphérique,
la paroi périphérique interne comprenant un canal de communication reliant de manière fluidique la chambre interne et la chambre intermédiaire.

Selon un mode de réalisation, le dispositif de contrôle comprend un régulateur de pression placé au niveau du canal de communication, ledit régulateur de pression étant configuré pour que, lors de la mise en fonctionnement du dispositif de mise en dépression, la chambre interne soit placée à une pression P2 inférieure à la pression atmosphérique et supérieure à la pression P1.

Selon un mode de réalisation, le dispositif de contrôle comprend une soupape de sécurité connectée à la chambre intermédiaire et commutable dans un état fermé lorsque la pression dans la chambre intermédiaire est supérieure ou égale à une pression Pmin et un état ouvert lorsque la pression dans la chambre intermédiaire est inférieure à la pression Pmin pour relier la chambre intermédiaire à l'extérieur.

Selon un mode de réalisation, la valeur de Pmin est comprise entre 200 à 1000 mbar, de préférence égale à 800 mbar.

Selon un mode de réalisation, l'invention fournit aussi un procédé de contrôle réalisé à l'aide d'un dispositif de contrôle de l'étanchéité précité sur un composant d'étanchéité d'une cuve de stockage de fluide, dans lequel le procédé comprend les étapes suivantes :
- appliquer de l'eau comprenant des tensioactifs ou injecter un gaz coloré, respectivement sur ou sous une portion à tester du composant d'étanchéité,
- placer le dispositif de contrôle de l'étanchéité à l'aide de la poignée de manutention sur la portion à tester de sorte que le joint périphérique soit en contact avec la portion à tester,
- enclencher l'organe de commande de sorte à mettre en dépression la chambre interne au moyen du dispositif de mise en dépression,
- observer par le couvercle transparent l'apparition respectivement de bulles sur la portion à tester ou de gaz coloré dans la chambre interne.

Selon un mode de réalisation, l'enclenchement de l'organe de commande met également en dépression la chambre intermédiaire, et lors de l'étape de mise en dépression, la chambre intermédiaire est placée sous une pression P1 inférieure à la pression atmosphérique.

Selon un mode de réalisation, lors de l'étape de mise en dépression, la chambre interne est placée sous une pression P2 inférieure à la pression atmosphérique et supérieure à la pression P1.

### Brève description des figures

L'invention sera mieux comprise, et d'autres buts, détails, caractéristiques et avantages de celle-ci apparaîtront plus clairement au cours de la description suivante de plusieurs modes de réalisation particuliers de l'invention, donnés uniquement à titre illustratif et non limitatif, en référence aux dessins annexés.
[Fig.1] La [Fig.1] représente une vue de dessus schématique d'un dispositif de contrôle de l'étanchéité selon un premier mode de réalisation, placé sur une membrane d'étanchéité.
[Fig.2] La [Fig.2] représente une vue schématique en coupe selon la ligne II-II de la [Fig.1] du dispositif de contrôle de l'étanchéité selon le premier mode de réalisation.
[Fig.3] La [Fig.3] représente une vue en perspective d'un dispositif de contrôle de l'étanchéité selon le premier mode de réalisation pour zone plane.
[Fig.4] La [Fig.4] représente une vue en perspective d'un dispositif de contrôle de l'étanchéité selon un deuxième mode de réalisation pour zone d'angle.
[Fig.5] La [Fig.5] représente une vue partielle d'un dispositif de contrôle de l'étanchéité selon un troisième mode de réalisation où est illustrée l'une des poignées de manutention.
[Fig.6] La [Fig.6] représente une vue en perspective partielle d'une structure d'angle de cuve avec le placement schématique d'un dispositif de contrôle de l'étanchéité selon le deuxième mode de réalisation.

### Description des modes de réalisation

On va décrire ci-dessous un dispositif de contrôle de l'étanchéité 4 qui peut être utilisé pour détecter des fuites dans un composant d'étanchéité tel qu'une membrane d'étanchéité 1 pour une cuve de stockage de fluide.

Dans l'exemple ci-dessous, la cuve de stockage de fluide est une cuve étanche et thermiquement isolante pour le stockage et/ou le transport de gaz liquéfié. La membrane d'étanchéité 1 est une membrane d'étanchéité réalisée en matériau composite stratifié comprenant une feuille d'aluminium entre deux couches de fibres de verre et de résine. La membrane d'étanchéité 1 comprend une pluralité d'éléments en matériau composite qui sont collés les uns aux autres par recouvrement de sorte à former une zone de chevauchement 3.

Toutefois, l'invention peut également être utilisée dans d'autres types de cuve et pour d'autres types de membranes d'étanchéité. Par exemple, la membrane d'étanchéité pourrait être une membrane métallique comprenant une pluralité d'éléments soudés les uns aux autres.

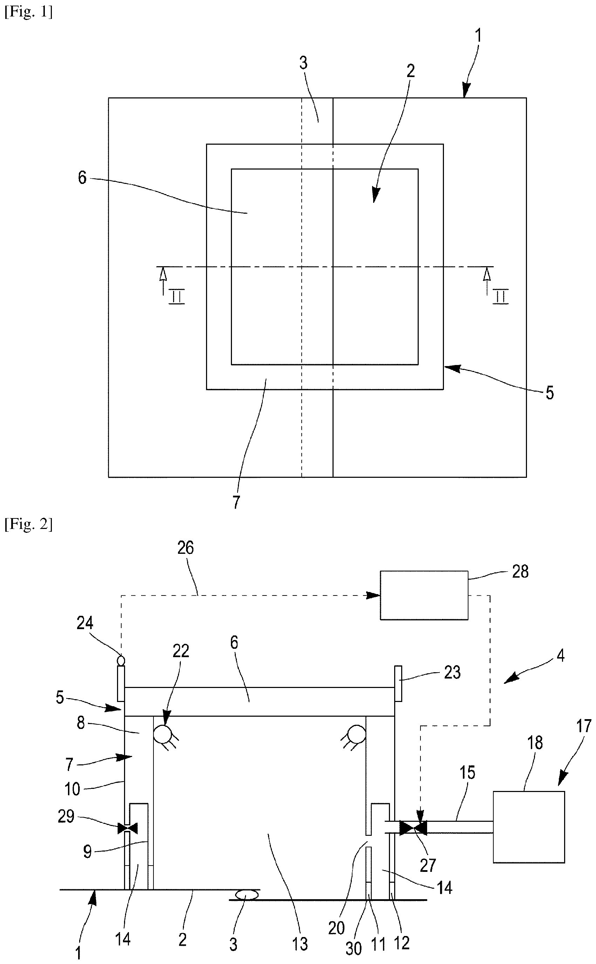

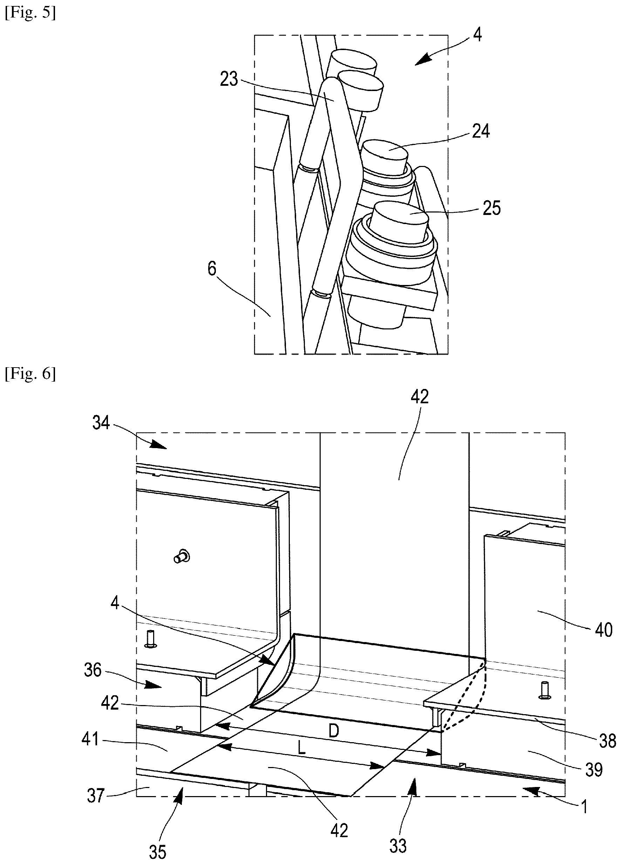

Pendant l'étape du test d'étanchéité permettant de vérifier l'étanchéité de la membrane 1, on place le dispositif de contrôle de l'étanchéité 4 sur une portion à tester 2 de la membrane 1. Cette portion à tester 2 peut se situer à l'emplacement d'une zone de chevauchement 3 comme illustrée sur les figures annexées, en particulier sur les figures 1 et 6, ou tout autre zone de la membrane d'étanchéité 1.

Le dispositif de contrôle de l'étanchéité 4 comporte une boîte 5 comprenant une cloison périphérique 7 et un couvercle 6 transparent dans le domaine du visible pour permettre l'observation de la portion à tester 2 au travers le couvercle 6 par un utilisateur. Le couvercle 6 est relié à la cloison périphérique 7 sur chacun de ses bords de sorte à former avec la cloison périphérique 7 une chambre interne 13 étanche.

Les figures 1 à 3 représentent un premier mode de réalisation du dispositif de contrôle de l'étanchéité 4. Comme représenté sur la [Fig.1] où seule la boîte 5 du dispositif de contrôle 4 est illustrée avec la membrane 1, le couvercle 6 est de forme rectangulaire et la cloison périphérique 7, également de forme rectangulaire, est fixée sur chacun des quatre bords du couvercle 6 de sorte à former une boîte 5 parallélépipédique rectangle. Toutefois, dans des modes de réalisation non représentés, la boîte 5 peut avoir toute forme adaptée à la portion à tester 2 de la membrane, par exemple une forme allongée, une forme polygonale ou une forme cylindrique, la cloison périphérique 7 s'adaptant à la forme du couvercle transparent 6.

La [Fig.2] représente également le premier mode de réalisation du dispositif de contrôle 4. Dans ce mode de réalisation, la cloison périphérique 7 comprend une portion supérieure 8, une paroi périphérique interne 9 et une paroi périphérique externe 10. La paroi périphérique interne 9 présente une extrémité inférieure équipée d'un joint périphérique interne 11 destiné à être positionné contre la membrane 1 tout autour de la chambre interne 13. La paroi périphérique interne 9 présente également une extrémité supérieure reliée de manière étanche à une extrémité inférieure de la portion supérieure 8. La portion supérieure 8 est reliée de manière étanche par une extrémité supérieure au couvercle 6.

Ainsi, l'ensemble formé par la portion à tester 2, le joint interne 11, la paroi interne 9, la portion supérieur 8 et le couvercle 6 forment toutes les parois de la chambre interne 13 permettant à celle-ci d'être sensiblement étanche lors d'un test d'étanchéité, hors fuite éventuelle de la portion à tester 2 de la membrane 1 ou raccordement à un dispositif de mise en dépression 17.

La cloison périphérique 7 comporte en outre une paroi périphérique externe 10 disposée à l'extérieur de la paroi périphérique interne 9 et espacée de celle-ci. La paroi périphérique externe 10 présente une extrémité inférieure équipée d'un joint périphérique externe 12 destiné à être positionné contre la membrane 1 tout autour du joint périphérique interne 11. La paroi périphérique externe 10 présente également une extrémité supérieure reliée de manière étanche à l'extrémité inférieure de la portion supérieure 8.

Ainsi, l'ensemble formé par la membrane 1, le joint externe 12, la paroi périphérique externe 10, la portion supérieure 8, la paroi périphérique interne 9, et le joint interne 11 forme toutes les parois d'une chambre intermédiaire 14 permettant à celle-ci d'être étanche lors d'un test d'étanchéité, hors fuite éventuelle de la membrane 1, raccordement à un dispositif de mise en dépression 17 ou à la chambre interne 13.

Dans le premier mode de réalisation représenté [Fig.2], la chambre interne 13 est reliée de manière fluidique à la chambre intermédiaire 14 par au moins un canal de communication 20 réalisé dans la paroi périphérique interne 9.

Le dispositif de contrôle 4 comprend également un dispositif de mise en dépression 17 qui comporte un premier, et unique dans ce mode de réalisation, organe de mise en dépression 18 raccordé à la chambre intermédiaire 14 par un premier tuyau 15. Le premier tuyau 15 traverse ainsi la paroi périphérique externe 10 afin de permettre la mise en dépression de la chambre intermédiaire 14 par le premier organe de mise en dépression 18. Dans ce mode de réalisation, la chambre interne 13 est également mise en dépression à l'aide du canal de communication 20 entre la chambre interne 13 et la chambre intermédiaire 14, et à l'aide du premier organe de mise en dépression 18.

De plus, dans ce mode de réalisation, la dimension du canal de communication 20 par rapport au volume de la chambre interne 13 et au volume de la chambre intermédiaire 14 est choisi de manière à ralentir l'équilibrage des pressions entre la chambre interne 13 et la chambre intermédiaire 14 lorsque le dispositif de mise en dépression 17 est actionné. Ainsi, la dimension du canal de communication permet d'obtenir une dépression plus importante dans la chambre intermédiaire 14 que dans la chambre interne pendant une durée donnée lors d'un test d'étanchéité de sorte à améliorer la fiabilité du test. De manière avantageuse, le canal de communication est dimensionné de manière à générer une perte de débit supérieure ou égale au débit de la fuite. Ainsi, à titre d'exemple, ce canal de communication peut présenter un diamètre compris entre 0,1 et quelques millimètres, en fonction de la taille des fuites auxquels on peut raisonnablement s'attendre compte tenu du ou des composants d'étanchéité testés.

Dans un autre mode de réalisation non représenté, la cloison périphérique 7 peut ne pas comprendre de portion supérieure 8. Ainsi, la chambre interne 13 serait ici délimitée par la portion à tester 2, la paroi périphérique interne 9, et le couvercle 6. De plus, la chambre intermédiaire 14 serait délimitée par la membrane 1, le joint externe 12, la paroi externe 10, le couvercle 6, la paroi interne et le joint interne 11.

Dans un autre mode de réalisation non représenté, un régulateur de pression peut être placé dans le canal de communication 20. Le régulateur de pression peut être une soupape configurée pour assurer une différence de pression entre la chambre interne 13 et la chambre intermédiaire 14. En effet, par exemple, si l'on souhaite avoir une pression P2 dans la chambre interne 13 qui est supérieure à une pression P1 dans la chambre intermédiaire 14, le régulateur de pression peut être configuré pour laisser ouvert la communication fluidique entre la chambre interne 13 et la chambre intermédiaire 14 tant que la pression de la chambre interne 13 n'a pas atteint la pression P1 puis fermer la communication fluidique dès que la valeur P1 est atteinte. En effet, l'organe de mise en dépression 18 étant raccordé à la chambre intermédiaire 14, celuici peut continuer à mettre en dépression la chambre intermédiaire 14 à une pression inférieure à la pression P1.

Dans un autre mode de réalisation non représenté, la chambre interne 13 n'est pas reliée à la chambre intermédiaire par un canal de communication 20. En effet, la chambre interne 13 et la chambre intermédiaire 14 pourraient être indépendantes l'une de l'autre de sorte qu'il est possible de les relier chacune au dispositif de mise en dépression 17 indépendamment.

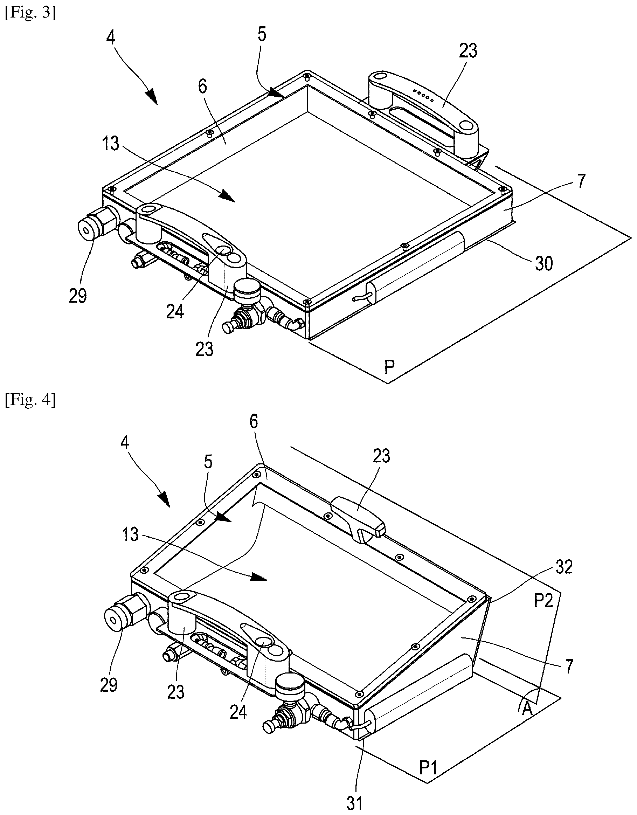

Comme visible sur les figures 2 et 3, la boite 5 comporte deux poignées de manutention 23 qui sont fixées sur la cloison périphérique 7 à proximité du couvercle 6. Les deux poignées de manutention sont positionnées à l'opposé l'une de l'autre pour permettre à un utilisateur d'agripper le dispositif de contrôle 4 avec ses deux mains et de positionner le dispositif de contrôle sur la portion à tester 2 aisément. Par exemple sur la [Fig.3], les poignées de manutention 23 sont fixées à l'aide d'une équerre sur la paroi périphérique externe 10. Les poignées de manutention 23 sont tournées à l'opposé des joints périphériques 11, 12.

Dans le mode de réalisation illustré sur ces figures 2 et 3, l'une des poignées de manutention 23 est équipée d'un organe de commande 24, ici un bouton poussoir, actionnable par la main de l'utilisateur tenant la poignée 23 pour produire un signal de commande 26. Dans ce mode de réalisation, l'organe de commande 24 est directement situé sur la poignée 23. Ce signal de commande 26 est transmis à une unité de commande 28. L'unité de commande 28 est configurée pour, en réponse à ce signal de commande 26, commuter une vanne commandée 27 située au niveau du dispositif de mise en dépression afin de faire passer cette vanne 27 d'un état ouvert à un état fermé et réciproquement.

Dans l'état ouvert, la vanne commandée 27 permet la communication fluidique de la chambre interne 13 et de la chambre intermédiaire 14 avec l'organe de mise en dépression 18. Dans l'état fermé, la vanne commandée 27 isole la chambre interne 13 et la chambre intermédiaire 14 de l'organe de mise en dépression 18.

Des organes de commande présentant une autre forme qu'un bouton poussoir peuvent être envisagés alternativement, par exemple un bouton tactile capacitif, un levier basculant, ou tout autre organe actionnable manuellement.

Dans un autre mode de réalisation illustré en [Fig.5], le dispositif de contrôle 4 comprend un premier organe de commande 24 actionnable manuellement pour produire un premier signal de commande 26 et le dispositif de contrôle 4 comporte en outre un deuxième organe de commande 25 actionnable manuellement pour produire un deuxième signal de commande 26. L'unité de commande 28 est ainsi ici configurée pour commuter la vanne commandée 27 dans l'état ouvert en réponse au premier signal de commande 26 venant du premier organe de commande 24 et dans l'état fermé en réponse au deuxième signal de commande 26 venant du deuxième organe de commande 25. De plus, dans ce mode de réalisation, les organes de commande 24, 25 ne sont pas situés sur la poignée de manutention 23 mais à proximité immédiate de celle-ci de sorte à être actionnable par une main d'un utilisateur tenant la poignée de manutention 23.

Le dispositif de contrôle 4 comporte également une pluralité de dispositifs d'éclairage 22 visibles sur la [Fig.2] qui sont positionnés sur la paroi périphérique interne 9 de sorte à éclairer la chambre interne 13.

Le dispositif de contrôle 4 comporte de plus une soupape de sécurité 29 illustrée sur les figures 2 et 3 connectée à la chambre intermédiaire 14 et commutable dans un état fermé lorsque la pression dans la chambre intermédiaire 14 est supérieure ou égale à une pression Pmin et un état ouvert lorsque la pression dans la chambre intermédiaire 14 est inférieure à la pression Pmin pour relier la chambre intermédiaire 14 à l'extérieur. Ainsi, la soupape de sécurité 29 prévient la formation d'un vide trop important et non nécessaire pour le contrôle dans la chambre intermédiaire 14 et a fortiori dans la chambre interne 13 permettant d'éviter tout endommagement du dispositif de contrôle 4 ou décollement de la membrane 1.

Le premier mode de réalisation illustré sur les figures 1 à 3 présente un dispositif de contrôle 4 pour une zone de test plane. En effet, les joints périphériques interne et externe 11, 12 présentent une extrémité de joint 30 formant une boucle tout autour de la chambre interne 13 et destinée à être positionnée contre la portion à tester 2, de sorte que l'extrémité de joint 30 est situé dans un plan P. Le couvercle est formé parallèlement au plan P. Ainsi, la boite 5 du dispositif de contrôle a la forme d'un parallélépipède rectangle sans paroi de fond, la paroi de fond étant réalisée par la portion à tester 2. Ainsi, le dispositif de contrôle 4 est adapté pour effectuer le contrôle de l'étanchéité dans les zones planes de la cuve.

Le deuxième mode de réalisation, illustré en [Fig.4], présente un dispositif de contrôle pour zone de test en angle.

Dans ce mode de réalisation, le joint périphérique interne 11 et le joint périphérique externe 12 présentent une extrémité de joint 30 formant une boucle tout autour de la chambre interne et destinée à être positionnée contre le composant d'étanchéité. Cette extrémité de joint 30 comprend une première partie 31 située dans un premier plan P1 et une deuxième partie 32 reliée à la première partie 31 et située dans un deuxième plan P2 incliné par rapport au premier plan P1 d'un angle A correspondant à l'angle de la cuve à épouser. De plus, le couvercle 6 est ici formé dans un plan incliné par rapport au premier plan P1 et au deuxième plan P2. Ainsi, la boite 5 du dispositif de contrôle 4 de ce mode de réalisation a la forme d'un prisme ayant pour base un quadrilatère, dont l'un des angles correspond à l'angle de la cuve, où deux parois latérales sont manquantes, les deux parois latérales étant formées par la portion à tester 2 en forme d'angle. De plus, afin de faciliter le positionnement du dispositif de contrôle 4 dans l'angle de la cuve, l'une des poignées 23 est réalisée en forme de U inversé tandis que l'autre poignée 23 est réalisée en forme de T.

Une cuve étanche et thermiquement isolante comprend une pluralité de parois 33, 34 formées chacune d'au moins une barrière thermiquement isolante et d'au moins une membrane d'étanchéité. Dans un angle d'une cuve étanche et thermiquement isolante à la jonction entre deux parois 33, 34, une structure d'angle est placée afin d'assurer la continuité de la barrière thermiquement isolante et de la membrane d'étanchéité des deux parois 33, 34. Une telle structure d'angle est représentée en [Fig.6]. Dans la présente invention, les parois de cuve 33, 34 comprennent une barrière thermiquement isolante secondaire 35, une membrane d'étanchéité secondaire 1, correspondant à la membrane à tester, supportée par la barrière thermiquement isolante secondaire 35, une barrière thermiquement isolante primaire 36 fixée à la membrane d'étanchéité secondaire 1 et une membrane d'étanchéité primaire (non représentée) supportée par la barrière thermiquement isolante primaire 36.

Ainsi, la structure d'angle comprend des éléments formant une partie de la barrière thermiquement isolante secondaire 35, des éléments formant une partie de la membrane d'étanchéité secondaire 1 et des éléments formant une partie de la barrière thermiquement isolante primaire 36. Par conséquent, la structure d'angle permet d'assurer la continuité des différentes barrières thermiquement isolantes et membranes d'étanchéité à la jonction entre une première paroi de cuve 33 et une deuxième paroi de cuve 34 inclinée par rapport à la première paroi de cuve 33 d'un angle déterminée, par exemple un angle de 90°.

La structure d'angle illustrée en [Fig.6] est composée ainsi :
- d'une rangée de panneaux isolants secondaires 37 de la première paroi 33 et d'une rangée de panneaux isolants secondaires 37 d'une deuxième paroi 34 qui sont fixés à la structure porteuse (non représentée),
- de feuilles étanches rigides 41 collées sur les panneaux isolants secondaires 37,
- de feuilles étanches souples 42 venant faire la jonction entre deux feuilles étanches rigides 41 adjacentes que ce soit au niveau de panneaux isolants secondaires d'une même paroi ou de parois différentes, comme illustré en [Fig.5],
- d'une rangée de panneaux isolants primaires d'angle 38 fixés aux feuilles étanches rigides 41, les panneaux isolants primaires d'angle 38 étant composés d'un bloc isolant primaire 39 de la première paroi de cuve 33 et d'un bloc isolant primaire 39 de la deuxième paroi de cuve 34 qui sont fixés l'un à l'autre à l'aide d'une cornière 40.

C'est au niveau des feuilles étanches souples 42 que le risque de fuite est le plus élevé notamment à la pliure formée pour suivre l'inclinaison entre la première paroi de cuve 33 et la deuxième paroi de cuve 34. C'est pourquoi il est avantageux que le dispositif de contrôle 4 puisse être placé au plus près de l'angle de la structure d'angle. Le dispositif de contrôle 4 a été illustré de manière schématique et en situation sur la [Fig.6].

Au niveau de l'espacement entre deux panneaux isolants secondaires 37 adjacents d'une même paroi de cuve, les deux blocs isolants primaires d'angle 38 sont espacés l'un de l'autre d'une distance D dans la direction de l'arête de cuve formée par l'intersection des deux parois de cuve 33, 34. Le dispositif de contrôle 4 présente ainsi avantageusement une dimension longitudinale dans la direction de l'arête de cuve inférieure à cette distance D. Dans un exemple de réalisation, cette distance D est égale à 322 mm ou 432 mm.

De plus, la feuille étanche souple 42 située entre deux panneaux isolants secondaires 37 adjacents d'une même paroi de cuve a une largeur L dans la direction de l'arête. Afin de minimiser le nombre de contrôle à effectuer, il est avantageux que le dispositif de contrôle 4 présente une dimension longitudinale dans la direction de l'arête de cuve supérieure à cette largeur L, comme représenté sur la [Fig.6]. Dans un exemple de réalisation, la largeur L des feuilles 42 est égale à 250 mm.

## Revendications

1. Dispositif de contrôle (4) de l'étanchéité d'un composant d'étanchéité (1), pour une cuve de stockage de fluide, dans lequel le dispositif de contrôle (4) comporte une boîte (5) comprenant :
- une cloison périphérique (7) comportant une paroi périphérique (9) présentant une extrémité inférieure équipée d'un joint périphérique (11) destiné à être positionné contre le composant d'étanchéité (1),
- un couvercle (6) réalisé dans un matériau transparent, le couvercle (6) étant relié à la cloison périphérique (7) de telle sorte que le couvercle (6) et paroi périphérique (9) soient aptes à définir, avec le composant d'étanchéité (1), une chambre interne (13), le joint périphérique (11) étant disposé tout autour de la chambre interne (13), et dans lequel le dispositif de contrôle (4) comprend :
- une poignée de manutention (23) fixée à la boîte (5) ;
- un organe de commande (24) actionnable manuellement pour produire un signal de commande (25), l'organe de commande (24) étant positionné sur ou à proximité immédiate de la poignée de manutention (23) de sorte à être actionnable par une main d'un utilisateur tenant la poignée de manutention (23),
- un dispositif de mise en dépression (17) qui est raccordé à la chambre interne (13) et est configuré pour mettre en dépression à l'aide d'un organe de mise en dépression (18) ladite chambre interne (13), le dispositif de mise en dépression (17) étant muni d'une vanne commandée (27) commutable dans un état ouvert pour relier la chambre interne (13) à l'organe de mise en dépression (18) et un état fermé pour isoler la chambre interne (13) de l'organe de mise en dépression (18) ;
- une unité de commande (28) configurée pour commuter la vanne commandée (27) en réponse au signal de commande (26).

2. Dispositif de contrôle (4) selon la revendication 1, dans lequel l'unité de commande (28) est configurée pour commuter la vanne commandée (27) alternativement entre l'état ouvert et l'état fermé en réponse au signal de commande.

3. Dispositif de contrôle (4) selon la revendication 1, dans lequel l'organe de commande est un premier organe de commande (24) actionnable manuellement pour produire un premier signal de commande et le dispositif de contrôle comporte en outre un deuxième organe de commande (25) actionnable manuellement pour produire un deuxième signal de commande, l'unité de commande (28) étant configurée pour commuter la vanne commandée (27) dans l'état ouvert en réponse au premier signal de commande et dans l'état fermé en réponse au deuxième signal de commande.

4. Dispositif de contrôle (4) selon la revendication 3, dans lequel la poignée de manutention est une première poignée de manutention (23) et le dispositif de contrôle (4) comporte en outre une deuxième poignée de manutention (23), la première poignée de manutention et la deuxième poignée de manutention (23) étant disposées sur le pourtour de la boite (5) à l'opposé l'une de l'autre.

5. Dispositif de contrôle (4) selon l'une des revendications 1 à 4, dans lequel la paroi périphérique est une paroi périphérique interne (9) et le joint périphérique est un joint périphérique interne (11), la cloison périphérique (7) comportant une paroi périphérique externe (10) disposée à l'extérieur de la paroi périphérique interne (9) de manière à définir, entre la paroi périphérique externe (10) et la paroi périphérique interne (9) une chambre intermédiaire (14), la paroi externe périphérique présentant une extrémité inférieure équipée d'un joint périphérique externe (12) destiné à être positionné contre le composant d'étanchéité (1) tout autour du joint périphérique interne (11) ;
et dans lequel le dispositif de mise en dépression (17) est raccordé à la chambre interne (13) et à la chambre intermédiaire (14) et est configuré pour mettre en dépression à l'aide de l'organe de mise en dépression (18) ladite chambre interne (13) et ladite chambre intermédiaire (14), le dispositif de mise en dépression (17) étant muni de la vanne commandée (27) commutable dans un état ouvert pour relier la chambre interne (13) et la chambre intermédiaire (14) à l'organe de mise en dépression (18) et un état fermé pour isoler la chambre interne (13) et la chambre intermédiaire (14) de l'organe de mise en dépression (18).

6. Dispositif de contrôle (4) selon la revendication 5, dans lequel le joint périphérique interne (11) et/ou le joint périphérique externe (12) présente une extrémité de joint (30) formant une boucle tout autour de la chambre interne (13) et destinée à être positionnée contre le composant d'étanchéité (1), l'extrémité de joint (30) tout autour de la chambre interne étant situé dans un plan, et le couvercle étant formé parallèlement audit plan de sorte à former un dispositif de contrôle (4) de l'étanchéité pour zone plane.

7. Dispositif de contrôle (4) selon la revendication 5, dans lequel le joint périphérique interne (11) et/ou le joint périphérique externe (12) présente une extrémité de joint (30) formant une boucle tout autour de la chambre interne et destinée à être positionnée contre le composant d'étanchéité (1), une première partie (31) de l'extrémité de joint étant située dans un premier plan P1 et une deuxième partie (32) de l'extrémité de joint étant située dans un deuxième plan P2 incliné par rapport au premier plan, et le couvercle étant formé dans un plan incliné par rapport au premier plan et au deuxième plan de sorte à former un dispositif de contrôle (4) de l'étanchéité pour zone d'angle.

8. Dispositif de contrôle (4) selon la revendication 7, dans lequel le dispositif de contrôle comporte une dimension longitudinale comprise entre 290 et 432 mm, de préférence égale à 320 mm ou 430mm, la dimension longitudinale étant destinée à être parallèle à une arête de cuve lors de l'utilisation.

9. Dispositif de contrôle (4) selon l'une des revendications 1 à 8, dans lequel le dispositif de contrôle (4) comporte au moins un dispositif d'éclairage (22) fixé à la cloison périphérique (7) et configuré pour éclairer la chambre interne (13).

10. Dispositif de contrôle (4) selon l'une des revendications 1 à 9 prise en combinaison avec la revendication 5, dans lequel le dispositif de contrôle (4) comprend un tuyau (15) d'évacuation d'air qui est raccordé, d'une part, à un organe de mise en dépression (18) du dispositif de mise en dépression (17) et, d'autre part, à la chambre intermédiaire (14) de manière à placer la chambre intermédiaire (14) sous une pression P1 inférieure à la pression atmosphérique,
la paroi périphérique interne (9) comprenant un canal de communication (20) reliant de manière fluidique la chambre interne (13) et la chambre intermédiaire (14).

11. Dispositif de contrôle (4) selon la revendication 10, dans lequel le dispositif de contrôle (4) comprend un régulateur de pression placé au niveau du canal de communication (20), ledit régulateur de pression étant configuré pour que, lors de la mise en fonctionnement du dispositif de mise en dépression (17), la chambre interne (13) soit placée à une pression P2 inférieure à la pression atmosphérique et supérieure à la pression P1.

12. Dispositif de contrôle (4) selon l'une des revendications 1 à 11 prise en combinaison avec la revendication 5, dans lequel le dispositif de contrôle (4) comprend une soupape de sécurité (29) connectée à la chambre intermédiaire (14) et commutable dans un état fermé lorsque la pression dans la chambre intermédiaire (14) est supérieure ou égale à une pression Pmin et un état ouvert lorsque la pression dans la chambre intermédiaire (14) est inférieure à la pression Pmin pour relier la chambre intermédiaire (14) à l'extérieur.

13. Procédé de contrôle réalisé à l'aide d'un dispositif de contrôle (4) de l'étanchéité selon l'une quelconque des revendications précédentes sur un composant d'étanchéité (1) d'une cuve de stockage de fluide, dans lequel le procédé comprend les étapes suivantes :
- appliquer de l'eau comprenant des tensioactifs ou injecter un gaz coloré, respectivement sur ou sous une portion à tester (2) du composant d'étanchéité (1),
- placer le dispositif de contrôle (4) de l'étanchéité à l'aide la poignée de manutention (23) sur la portion à tester (2) de sorte que le joint périphérique (11) soit en contact avec la portion à tester (2),
- enclencher l'organe de commande (24) de sorte à mettre en dépression la chambre interne (13) au moyen du dispositif de mise en dépression (17),
- observer par le couvercle (6) transparent l'apparition respectivement de bulles sur la portion à tester (2) ou de gaz coloré dans la chambre interne (13).

14. Procédé de contrôle selon la revendication 13 réalisé à l'aide d'un dispositif de contrôle (4) de l'étanchéité selon la revendication 5, dans lequel l'enclenchement de l'organe de commande (24) met également en dépression la chambre intermédiaire (14), et lors de l'étape de mise en dépression, la chambre intermédiaire (14) est placée sous une pression P1 inférieure à la pression atmosphérique.

15. Procédé d'utilisation selon la revendication 14, dans lequel lors de l'étape de mise en dépression, la chambre interne (13) est placée sous une pression P2 inférieure à la pression atmosphérique et supérieure à la pression P1.

## Patentansprüche

1. Vorrichtung (4) zur Kontrolle der Dichtheit einer Dichtungskomponente (1) für einen Flüssigkeitsspeichertank, wobei die Kontrollvorrichtung (4) einen Kasten (5) umfasst, welcher umfasst:
- eine Umfangstrennwand (7), die eine Umfangswand umfasst (9) mit einem unteren Ende, das mit einer Umfangsdichtung (11) ausgestattet ist, die dazu bestimmt ist, gegen die Dichtungskomponente (1) positioniert zu werden,
- eine Abdeckung (6) aus einem transparenten Material, wobei die Abdeckung (6) derart mit der Umfangstrennwand verbunden ist (7), dass der Deckel (6) und die Umfangswand (9) mit der Dichtungskomponente (1) eine Innenkammer (13) definieren können, wobei die Umfangsdichtung (11) umlaufend in der Innenkammer (13) angeordnet ist und wobei die Kontrollvorrichtung (4) umfasst:
- einen Handhabungsgriff (23), der an dem Kasten (5) befestigt ist;
- ein Steuerorgan (24), welches manuell betätigt werden kann, um ein Steuersignal (25) zu erzeugen, wobei das Steuerorgan (24) am oder in unmittelbarer Nähe des Handhabungsgriffs (23) angeordnet ist, so dass es von einer Hand eines Benutzers, der den Handhabungsgriff (23) hält, betätigt werden kann,
- eine Unterdruckvorrichtung (17), welche mit der Innenkammer (13) verbunden und so konfiguriert ist, dass sie mithilfe eines Unterdruckorgans (18) einen Unterdruck in der Innenkammer (13) erzeugt, wobei die Unterdruckvorrichtung (17) mit einem gesteuerten Ventil (27) ausgestattet ist, welches in einen offenen Zustand zum Verbinden der Innenkammer(13) mit dem Unterdruckorgan(18) und in einen geschlossenen Zustand zum Isolieren der Innenkammer (13) von dem Unterdruckorgan (18) schaltbar ist;
- eine Steuereinheit (28), die so konfiguriert ist, dass sie das gesteuerte Ventil (27) in Reaktion auf das Steuersignal (26) schaltet.

2. Kontrollvorrichtung (4) gemäß Anspruch 1, wobei die Steuereinheit (28) so konfiguriert ist, dass sie das gesteuerte Ventil (27) in Reaktion auf das Steuersignal abwechselnd zwischen dem offenen Zustand und dem geschlossenen Zustand umschaltet.

3. Kontrollvorrichtung (4) gemäß Anspruch 1, wobei das Steuerorgan ein erstes manuell betätigbares Steuerorgan (24) ist, um ein erstes Steuersignal zu erzeugen, und die Kontrollvorrichtung ferner ein zweites manuell betätigbares Steuerorgan (25) umfasst, um ein zweites Steuersignal zu erzeugen, wobei die Steuereinheit (28) so konfiguriert ist, dass sie das gesteuerte Ventil (27) in Reaktion auf das erste Steuersignal in den offenen Zustand und in Reaktion auf das zweite Steuersignal in den geschlossenen Zustand schaltet.

4. Kontrollvorrichtung (4) gemäß Anspruch 3, wobei der Handhabungsgriff ein erster Handhabungsgriff (23) ist und die Kontrollvorrichtung (4) weiterhin einen zweiten Handhabungsgriff (23) aufweist, wobei der erste Handhabungsgriff und der zweite Handhabungsgriff (23) am Umfang des Kastens (5) einander gegenüberliegend angeordnet sind.

5. Kontrollvorrichtung (4) gemäß einem der Ansprüche 1 bis 4, wobei die Umfangswand eine innere Umfangswand (9) und die Umfangsdichtung eine innere Umfangsdichtung (11) ist, wobei die Umfangswand (7) eine äußere Umfangswand (10) umfasst, die außerhalb der inneren Umfangswand (9) angeordnet ist, um, zwischen der äußeren Umfangswand (10) und der inneren Umfangswand (9) eine Zwischenkammer (14) zu definieren, wobei die äußere Umfangswand ein unteres Ende aufweist, das mit einer äußeren Umfangsdichtung (12) ausgestattet ist, die dazu bestimmt ist, gegen die Dichtungskomponente (1) rund um die innere Umfangsdichtung (11) positioniert zu werden;
und wobei die Unterdruckvorrichtung (17) mit der Innenkammer (13) und der Zwischenkammer (14) verbunden ist und konfiguriert ist, um mit Hilfe des Unterdruckorgans (18) die Innenkammer (13) und die Zwischenkammer (14) unter Unterdruck zu setzen, wobei die Unterdruckvorrichtung (17) mit dem gesteuerten Ventil (27) versehen ist, das in einen offenen Zustand zum Verbinden der Innenkammer (13) und der Zwischenkammer (14) mit dem Unterdruckelement (18) und in einen geschlossenen Zustand zum Isolieren der Innenkammer (13) und der Zwischenkammer (14) von dem Unterdruckelement (18) schaltbar ist.

6. Kontrollvorrichtung (4) gemäß Anspruch 5, wobei die innere Umfangsdichtung (11) und/oder die äußere Umfangsdichtung (12) ein Dichtungsende (30) aufweisen, welches eine Schlaufe rund um die Innenkammer (13) bildet und dazu bestimmt ist, gegen die Dichtungskomponente (1) positioniert zu werden, wobei das Dichtungsende (30) rund um die Innenkammer in einer Ebene liegt und die Abdeckung parallel zu der Ebene ausgebildet ist, um eine Vorrichtung (4) zur Kontrolle der Dichtheit für einen ebenen Bereich zu bilden.

7. Kontrollvorrichtung (4) gemäß Anspruch 5, wobei die innere Umfangsdichtung (11) und/oder die äußere Umfangsdichtung (12) ein Dichtungsende (30) aufweisen, welches eine Schlaufe um die gesamte Innenkammer bildet und dazu bestimmt ist, gegen die Dichtungskomponente (1) positioniert zu werden, wobei ein erster Teil (31) des Dichtungsendes in einer ersten Ebene P1 liegt und ein zweiter Teil (32) des Dichtungsendes in einer zweiten Ebene P2 liegt, welche in Bezug auf die erste Ebene geneigt ist, und die Abdeckung in einer Ebene ausgebildet ist, die in Bezug auf die erste Ebene und die zweite Ebene geneigt ist, um eine Vorrichtung (4) zur Kontrolle der Dichtheit für Eckbereich zu bilden.

8. Kontrollvorrichtung (4) gemäß Anspruch 7, wobei die Kontrollvorrichtung eine Längsabmessung zwischen 290 und 432 mm, vorzugsweise gleich 320 mm oder 430 mm, aufweist, wobei die Längsabmessung dazu bestimmt ist, bei der Verwendung parallel zu einer Gefäßkante zu verlaufen.

9. Kontrollvorrichtung (4) gemäß einem der Ansprüche 1 bis 8, wobei die Kontrollvorrichtung (4) mindestens eine Beleuchtungsvorrichtung (22) umfasst, welche an der Umfangswand (7) befestigt ist und so konfiguriert ist, dass sie die Innenkammer (13) beleuchtet.

10. Kontrollvorrichtung (4) gemäß einem der Ansprüche 1 bis 9 in Verbindung mit Anspruch 5, wobei die Kontrollvorrichtung (4) eine Abluftleitung (15) umfasst, welche einerseits mit einem Unterdruckorgan (18) der Unterdruckvorrichtung (17) und andererseits mit der Zwischenkammer (14) verbunden ist, um die Zwischenkammer (14) unter einen Druck P1 zu setzen, der niedriger als der Atmosphärendruck ist,
wobei die innere Umfangswand (9) einen Verbindungskanal (20) umfasst, der die Innenkammer (13) und die Zwischenkammer (14) fluidisch verbindet.

11. Kontrollvorrichtung (4) gemäß Anspruch 10, wobei die Kontrollvorrichtung (4) einen Druckregler umfasst, welcher an dem Verbindungskanal (20) angeordnet ist, wobei der Druckregler so konfiguriert ist, dass beim Einschalten der Unterdruckvorrichtung (17) die Innenkammer (13) auf einen Druck P2 gesetzt wird, der niedriger als der Atmosphärendruck und höher als der Druck P1 ist.

12. Kontrollvorrichtung (4) gemäß einem der Ansprüche 1 bis 11 in Kombination mit Anspruch 5, wobei die Kontrollvorrichtung (4) ein Sicherheitsventil (29) umfasst, das mit der Zwischenkammer (14) verbunden ist und in einen geschlossenen Zustand schaltbar ist, wenn der Druck in der Zwischenkammer (14) größer oder gleich einem Druck Pmin ist, und in einen offenen Zustand schaltbar ist, wenn der Druck in der Zwischenkammer (14) kleiner als der Druck Pmin ist, um die Zwischenkammer (14) mit dem Außenbereich zu verbinden.

13. Kontrollverfahren, das mit Hilfe einer Vorrichtung (4) zur Kontrolle der Dichtheit nach einem der vorhergehenden Ansprüche an einer Dichtungskomponente (1) eines Flüssigkeitsspeichertankes durchgeführt wird, wobei das Verfahren die folgenden Schritte umfasst:
- Aufbringen von Wasser, welches Tenside enthält, oder Einspritzen eines farbigen Gases, jeweils auf oder unter einem zu prüfenden Abschnitt (2) der Dichtungskomponente (1),
- Platzieren der Vorrichtung (4) zur Kontrolle der Dichtheit mithilfe des Handgriffs (23) auf dem zu prüfenden Abschnitt (2), so dass die Umfangsdichtung (11) den zu prüfenden Abschnitt (2) berührt,
- Einrasten lassen des Betätigungsorgans (24), so dass die Innenkammer (13) mithilfe der Unterdruckvorrichtung (17) unter Unterdruck gesetzt wird,
- Beobachten des Auftretens von Blasen auf dem zu testenden Teil (2) bzw. von farbigem Gas in der Innenkammer (13) durch den durchsichtigen Deckel (6).

14. Kontrollverfahren nach Anspruch 13, das mit Hilfe einer Vorrichtung (4) zur Kontrolle der Dichtheit nach Anspruch 5 durchgeführt wird, wobei durch das Einschalten des Steuerorgans (24) auch die Zwischenkammer (14) unter Unterdruck gesetzt wird, und beim Schritt des unter Unterdruck die Zwischenkammer (14) unter einen Druck P1 gesetzt wird, der niedriger ist als der Atmosphärendruck.

15. Verfahren zur Verwendung nach Anspruch 14, wobei beim Schritt des unter Unterdruck setzens die Innenkammer (13) unter einen Druck P2 gesetzt wird, der niedriger als der Atmosphärendruck und höher als der Druck P1 ist.

## Claims

1. A device (4) for monitoring the tightness of a sealing component (1) for a fluid storage tank, in which the monitoring device (4) includes a box (5) comprising:
- a peripheral partition (7) having a peripheral wall (9) with a lower end fitted with a peripheral seal (11) designed to be positioned against the sealing component (1),
- a cover (6) made of a transparent material, the cover (6) being linked to the peripheral partition (7) such that the cover (6) and the peripheral wall (9) are able to define an internal chamber (13) with the sealing component (1), the peripheral seal (11) being arranged about the entire internal chamber (13), and in which the monitoring device (4) includes:
- a handling handle (23) fastened to the box (5),
- a control member (24) actuated manually to generate a control signal (25), the control member (24) being positioned on or in the immediate vicinity of the handling handle (23) to enable a user holding the handling handle (23) to actuate the control member,
- a pressure-reducing device (17) that is connected to the internal chamber (13) and is designed to reduce the pressure in said internal chamber (13) using a pressure-reducing member (18), the pressure-reducing device (17) being provided with a controlled valve (27) that can be switched to an open state to link the internal chamber (13) to the pressure-reducing member (18), and to a closed state to isolate the internal chamber (13) from the pressure-reducing member (18),
- a control unit (28) designed to switch the controlled valve (27) in response to the control signal (26).

2. The monitoring device (4) as claimed in claim 1, in which the control unit (28) is configured to switch the controlled valve (27) alternately between the open state and the closed state in response to the control signal.

3. The monitoring device (4) as claimed in claim 1, in which the control member is a first control member (24) that can be actuated manually to generate a first control signal, and the monitoring device also has a second control member (25) that can be actuated manually to generate a second control signal, the control unit (28) being configured to switch the controlled valve (27) to the open state in response to the first control signal and to the closed state in response to the second control signal.

4. The monitoring device (4) as claimed in claim 3, in which the handling handle is a first handling handle (23), and the monitoring device (4) also has a second handling handle (23), the first handling handle and the second handling handle (23) being arranged on the perimeter of the box (5) opposite one another.

5. The monitoring device (4) as claimed in one of claims 1 to 4, in which the peripheral wall is an internal peripheral wall (9) and the peripheral seal is an internal peripheral seal (11), the peripheral partition (7) having an external peripheral wall (10) arranged on the outside of the internal peripheral wall (9) such as to define an intermediate chamber (14) between the external peripheral wall (10) and the internal peripheral wall (9), the external peripheral wall having a lower end fitted with an external peripheral seal (12) that is designed to be positioned against the sealing component (1) about the entire internal peripheral seal (11), and in which the pressure-reducing device (17) is connected to the internal chamber (13) and to the intermediate chamber (14) and is designed to reduce the pressure in said internal chamber (13) and said intermediate chamber (14) using the pressure-reducing member (18), the pressure-reducing device (17) being provided with the controlled valve (27) that can be switched to an open state to link the internal chamber (13) and the intermediate chamber (14) to the pressure-reducing member (18), and to a closed state to isolate the internal chamber (13) and the intermediate chamber (14) from the pressure-reducing member (18).

6. The monitoring device (4) as claimed in claim 5, in which the internal peripheral seal (11) and/or the external peripheral seal (12) have a sealing end (30) forming a loop about the entire internal chamber (13) that is designed to be positioned against the sealing component (1), the sealing end (30) about the entire internal chamber being positioned in a plane, and the cover being formed parallel to said plane such as to form the tightness monitoring device (4) for a flat zone.

7. The monitoring device (4) as claimed in claim 5, in which the internal peripheral seal (11) and/or the external peripheral seal (12) have a sealing end (30) forming a loop about the entire internal chamber that is designed to be positioned against the sealing component (1), a first portion (31) of the sealing end being positioned in a first plane P1 and a second portion (32) of the sealing end being positioned in a second plane P2 that is inclined in relation to the first plane, and the cover being formed in a plane that is inclined in relation to the first plane and to the second plane such as to form the tightness monitoring device (4) for a corner zone.

8. The monitoring device (4) as claimed in claim 7, in which the longitudinal dimension of the monitoring device is between 290 mm and 432 mm, preferably 320 mm or 430 mm, the longitudinal dimension being intended to be parallel to a tank edge during use.

9. The monitoring device (4) as claimed in one of claims 1 to 8, in which the monitoring device (4) has at least one lighting device (22) fastened to the peripheral partition (7) and designed to illuminate the internal chamber (13).

10. The monitoring device (4) as claimed in one of claims 1 to 9 in combination with claim 5, in which the monitoring device (4) has an air discharge pipe (15) that is connected firstly to a pressure-reducing member (18) of the pressure-reducing device (17), and secondly to the intermediate chamber (14) such as to bring the pressure P1 in the intermediate chamber (14) below atmospheric pressure, the internal peripheral wall (9) having a communication channel (20) fluidly linking the internal chamber (13) and the intermediate chamber (14).

11. The monitoring device (4) as claimed in claim 10, in which the monitoring device (4) has a pressure regulator positioned on the communication channel (20), said pressure regulator being designed so that the internal chamber (13) is brought to a pressure P2 below atmospheric pressure and greater than the pressure P1 when the pressure-reducing device (17) is activated.

12. The monitoring device (4) as claimed in one of claims 1 to 11 in combination with claim 5, in which the monitoring device (4) has a safety valve (29) that is connected to the intermediate chamber (14) and can be switched to a closed state when the pressure in the intermediate chamber (14) is equal to or greater than a pressure Pmin, and to an open state when the pressure in the intermediate chamber (14) is less than the pressure Pmin to link the intermediate chamber (14) with the outside.

13. A monitoring method carried out using a tightness monitoring device (4) as claimed in any one of the preceding claims on a sealing component (1) of a fluid storage tank, in which the method comprises the following steps:
- applying water containing surfactants or injecting a colored gas respectively on or beneath a portion (2) to be tested of the sealing component (1),
- placing the tightness monitoring device (4) on the portion (2) to be tested using the handling handle (23) so that the peripheral seal (11) is in contact with the portion (2) to be tested,
- activating the control member (24) to reduce the pressure in the internal chamber (13) using the pressure-reducing device (17),
- looking through the transparent cover (6) for the appearance of bubbles in the portion (2) to be tested or colored gas in the internal chamber (13) respectively.

14. The monitoring method as claimed in claim 13, carried out using a tightness monitoring device (4) as claimed in claim 5, in which activation of the control member (24) also reduces the pressure in the intermediate chamber (14), and the intermediate chamber (14) is brought to a pressure P1 below atmospheric pressure during the pressure reduction stage.

15. The usage method as claimed in claim 14, in which the internal chamber (13) is brought to a pressure P2 below atmospheric pressure and above the pressure P1 during the pressure reduction stage.
